**Europäisches Patentamt**

**European Patent Office**

**Office européen des brevets**

(19)

(11) Veröffentlichungsnummer: **0 085 290**
**B1**

(12)

# EUROPÄISCHE PATENTSCHRIFT

(45) Veröffentlichungstag der Patentschrift:
**08.10.86**

(21) Anmeldenummer: **82890176.9**

(22) Anmeldetag: **24.11.82**

(51) Int. Cl.⁴: **F 27 B 1/20,** F 27 D 3/08,
B 65 G 65/46

(54) **Vorrichtung zum Austragen von heissem Gut, insbesondere von Eisenschwamm aus einem Schachtofen.**

(30) Priorität: **11.01.82 AT 50/82**

(43) Veröffentlichungstag der Anmeldung:
**10.08.83 Patentblatt 83/32**

(45) Bekanntmachung des Hinweises auf die Patenterteilung:
**08.10.86 Patentblatt 86/41**

(84) Benannte Vertragsstaaten:
**BE DE FR GB IT LU NL SE**

(56) Entgegenhaltungen:
EP - A - 0 019 389
DE - A - 2 618 911
DE - B - 1 078 490
DE - C - 824 464
FR - A - 1 434 361
US - A - 2 597 326
US - A - 3 280 996
US - A - 3 704 011

(73) Patentinhaber: **VOEST-ALPINE Aktiengesellschaft,**
**Werksgelände, A-4010 Linz (AT)**

(72) Erfinder: **Pirklbauer, Wilfried, Dr., Hasnerstrasse 36,**
**A-4020 Linz (AT)**
Erfinder: **Nagl, Martin, Ing., A-4845 Rutzenmoos (AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7, A-4020 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Austragen von heissem Gut, insbesondere von Eisenschwamm aus einem Schachtofen, bestehend aus sternförmig in entsprechenden Fördertrögen angeordneten, konischen Förderschnecken, die mit ihrem inneren Ende in einem zentralen Hohlkörper gelagert sind.

Bei einer bekannten Austragsvorrichtung dieser Art (US-PS 3 704 011) sind die Förderschnecken aussen im Ofenmantel und innen in einem zentralen Rohr gelagert, das durch den Ofen geführt ist. Unterhalb der Förderschnecken ist zwischen dem zentralen Rohr und dem Ofenmantel ein aus einzelnen Sektoren zusammengesetzter Boden vorgesehen, der in den Zwickel zwischen den eng benachbarten Förderschnecken reicht und Fördertröge bildet. Im Bereich des Ofenmantels weist dieser Boden eine ringförmige Durchtrittsöffnung auf, durch die das auszutragende Gut fällt. Nachteilig bei dieser bekannten Austragsvorrichtung ist, dass aufgrund der Anordnung der Förderschnecken zwischen dem Ofenmantel und dem zentralen Rohr die Förderschnecken bei abgenommenem Boden von unten in den Ofen eingebracht werden müssen, bevor die die Förderschnecken tragenden Wellen in radialer Richtung durch die Lagerbohrungen im Ofenmantel und im zentralen Rohr eingeführt werden können. Dies bedeutet, dass zum Auswechseln einer Förderschnecke der Ofen nicht nur völlig entleert, sondern auch zum Teil zerlegt werden muss. Ausserdem ist durch die ringförmige Durchtrittsöffnung zum Austragen des Gutes ein gasdichter Abschluss des Ofens kaum möglich. Darüber hinaus kann eine solche Austragsvorrichtung in einem bestehenden Schachtofen nur mit einem aufwendigen Umbau des Ofens nachträglich eingebaut werden.

Bei einer gattungsfremden Austragsvorrichtung für einen Schachtofen ist es bekannt (EP-A-0 019 389), die sternförmig angeordneten Förderschnecken zu neigen und jeweils in einem Ansatzstutzen fliegend zu lagern, der an dem mit dem Ofenmantel einstückigen Ofenboden angeflanscht ist, so dass das freie Ende der Förderschnecken in den Ofenraum ragt und den Gutaustrag über trogförmige Schurren unterstützt, die entsprechend den Förderschnecken sternförmig verlaufen und sich in einer von den Ansatzstutzen abzweigenden Austragsleitung fortsetzen. Dieser Umstand macht einen Schneckenaustausch bei nicht entleertem Ofen unmöglich, weil das Ofengut über die Schurren durch die Ansatzstutzen beim Schneckenausbau selbst dann herausfallen kann, wenn die Austragsleitungen gesperrt sind. Um einen ausreichenden Zutritt des Austragungsgutes zu den Förderschnecken sicherzustellen, ist ausserdem die fliegende Lagerung der Förderschnecken unumgänglich, was eine Übertragung dieser bekannten Konstruktion auf Austragsvorrichtungen mit horizontal angeordneten Förderschnecken aufgrund der abzutragenden Auflast durch das Gutgewicht ausschliesst.

Der Erfindung liegt somit die Aufgabe zugrunde, eine Vorrichtung der eingangs geschilderten Art zum Austragen von heissem Gut, insbesondere verbessern, dass einerseits ein einfacher Austausch der Förderschnecken auch bei nicht entleertem Ofen möglich wird und anderseits bestehende Öfen mit der Austragsvorrichtung ohne aufwendigen Umbau ausgerüstet werden können. Darüber hinaus soll mit einfachen Mitteln ein gasdichter Abschluss des Ofens im Bereich der Austragsvorrichtung gewährleistet sein.

Die Erfindung löst die gestellte Aufgabe dadurch, dass der nach unten offene, zentrale Hohlkörper und die die Förderschnecken aufnehmenden Fördertröge durch einen an den Ofenmantel anflanschbaren Boden gebildet sind und dass die Fördertröge zumindest eine dem grössten Aussendurchmesser der Förderschnecken entsprechende grösste Tiefe aufweisen und an der äusseren Stirnseite durch eine Stirnwand abgeschlossen sind, die mit einer Durchtrittsöffnung für die Förderschnecke versehen ist und ein das äussere Förderschneckenende aufnehmendes, gasdichtes Austragungsgehäuse mit einem Austragungsstutzen trägt.

Da die Förderschnecken nicht im Ofenmantel und in einem feststehenden, zentralen Rohr, sondern in einem Boden gelagert sind, der die Fördertröge für die Förderschnecken und den zentralen Hohlkörper bildet, wird mit der erfindungsgemässen Austragungsvorrichtung eine an den Ofenmantel anflanschbare Baueinheit erhalten, die einen besonderen Umbau des Ofens selbst unnötig macht. Auf Grund der an den grössten Aussendurchmesser der Förderschnecken angepassten Tiefe der Fördertröge ergibt sich ausserdem die Möglichkeit, die äusseren Stirnseiten dieser Tröge durch Stirnwände abzuschliessen und die Förderschnecken durch diese Stirnwände hindurch in Austragungsgehäuse zu führen, die an den Stirnwänden gasdicht angesetzt sind. Diese das äussere Förderschneckenende aufnehmenden Austragungsgehäuse, die über einen Austragungsstutzen an eine gasdichte Austragungsleitung angeschlossen werden können, sind ohne Schwierigkeiten gasdicht auszuführen, so dass der gasdichte Abschluss des Ofens sichergestellt ist. Die das äussere Förderschneckenende aufnehmenden Austragungsgehäuse an den Stirnwänden der Fördertröge erlauben es aber auch, die Förderschnecken in axialer Richtung, also radial zum Ofenmantel ein- und auszubauen. Die sich nach aussen konisch erweiternden Förderschnecken können ja durch die Durchtrittsöffnung in den Stirnwänden in den Ofen eingeführt oder aus dem Ofen herausgezogen werden. Zu diesem Zweck sind lediglich die inneren Lager im Bereich des zentralen Hohlkörpers zu öffnen, was auf Grund des nach unten offenen und daher von unten zugänglichen Hohlkörpers einfach durchführbar ist, und die Förderschnecken entweder mit dem Austragungsgehäuse oder durch das Austragungsgehäuse abzuziehen.

Besonders einfache Verhältnisse erhält man, wenn das äussere Ende der Förderschnecken je in einer abnehmbaren Aussenwand der Austragungsgehäuse gelagert ist. Es braucht demnach zum Ein- und Ausbau der Förderschnecken nur die Aussenwand des Austragungsgehäuses entfernt zu werden, um einen freien Durchtrittsweg für die Förderschnecken zu erhalten.

Das Ein- und Ausbauen der Förderschnecken wird in besonderer Weise vereinfacht, wenn in weiterer Ausbildung der Erfindung die Förderschnecken eine Hohlwelle zum Aufnehmen einer Führungsstange aufweisen. Durch die Hohlwelle der Förderschnecken kann nämlich eine Führungsstange gesteckt werden, die die Verschieberichtung bestimmt, so dass das Zentrieren der Förderschnecken keine Probleme macht. Soll eine Förderschnecke bei einem nicht entleerten Ofen ausgetauscht werden, so schraubt sich die Förderschnecke bei einer entsprechenden Drehung von selbst durch das Ofengut.

Austragungsvorrichtungen mit sternförmig angeordneten Förderschnecken, die hohle Wellen aufweisen, sind zwar bereits bekannt, doch dienen diese bekannten Hohlwellen lediglich zur Führung von Kühlflüssigkeit, so dass mit diesen bekannten Förderschnecken der erfindungsgemässe Effekt nicht erreicht werden kann. Eine Kühlung ist sogar unerwünscht, um keine Wärmeverluste des Ofengutes in Kauf nehmen zu müssen.

Da der Radius der Führungsstangen naturgemäss um die Wandstärke der Hohlwellen gegenüber diesen verringert sein muss, ergibt sich bei der Abstützung der Führungsstange ein entsprechendes Spiel, das für eine genaue Führung der Förderschnecken auf der Führungsstange auszugleichen ist. Besonders einfache Verhältnisse werden diesbezüglich geschaffen, wenn die Förderschnecken paarweise diametral zum zentralen Hohlkörper angeordnet sind. Bei einer solchen Ausbildung kann nämlich die Führungsstange spielfrei in der Hohlwelle der diametral gegenüberliegenden Förderschnecke gehalten werden, so dass zusätzliche Massnahmen unnötig werden.

Um einen Gutstau im Bereich des zentralen Hohlkörpers zu vermeiden, der ein Teil des Ofenbodens ist und sich nicht durch den Ofen erstreckt, kann schliesslich der zentrale Hohlkörper einen Verteilerkegel oder eine Verteilerpyramide bilden, die das Ofengut aus der Ofenmitte gegen die Fördertröge verdrängt.

In der Zeichnung ist der Erfindungsgegenstand in einem Ausführungsbeispiel dargestellt. Es zeigen

Fig. 1 eine erfindungsgemässe Vorrichtung zum Austragen von Eisenschwamm aus einem Schachtofen in einer teilweise aufgerissenen Draufsicht,

Fig. 2 diese Vorrichtung in einem Schnitt nach der Linie II-II der Fig. 1 und

Fig. 3 eine zum Teil aufgerissene Seitenansicht der Vorrichtung.

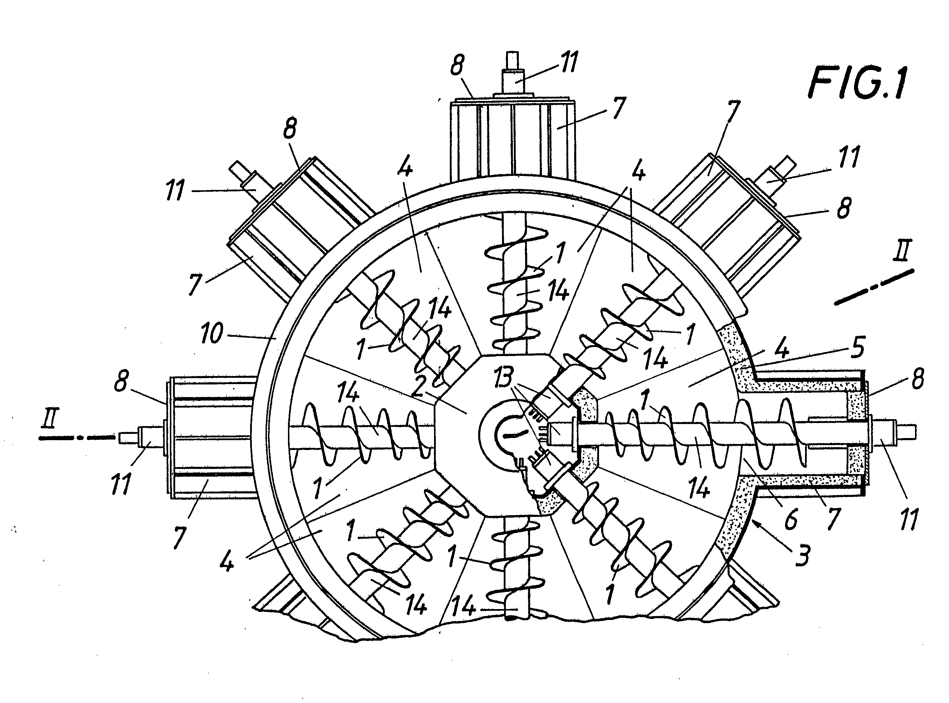

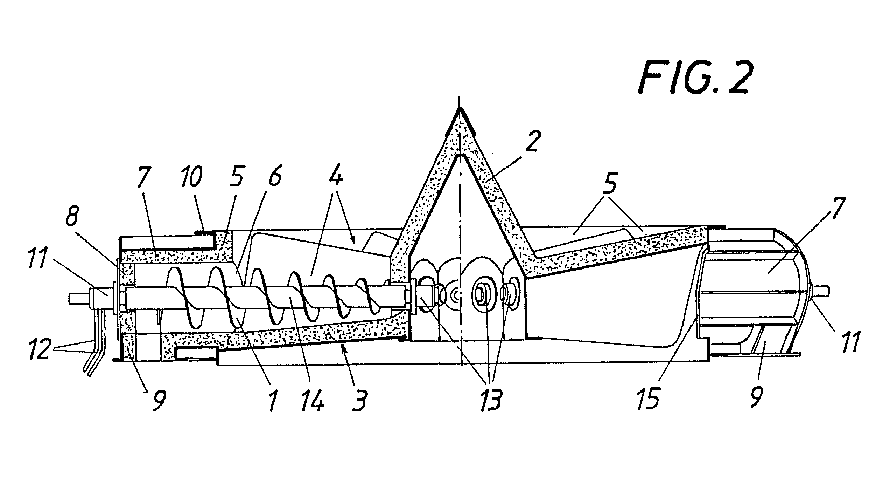

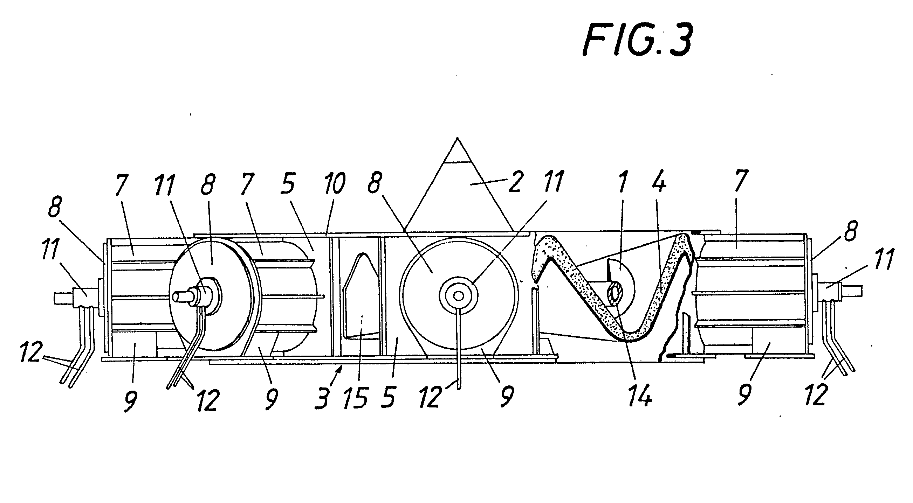

Wie insbesondere der Fig. 1 entnommen werden kann, weist die dargestellte Austragungsvorrichtung sternförmig angeordnete, konische Förderschnecken 1 auf, die mit ihren inneren Enden in einem nach unten offenen, zentralen Hohlkörper 2 gelagert sind. Dieser Hohlkörper 2, der einen Verteilerkegel für das darüber befindliche Ofengut bildet, ist Teil eines Bodens 3, der die Förderschnecken 1 in Fördertrögen 4 aufnimmt, deren grösste Tiefe grösser als der grösste Aussendurchmesser der Förderschnecken 1 ist, wie dies deutlich den Fig. 2 und 3 zu entnehmen ist. Diese Fördertröge 4, die vom zentralen Hohlkörper 2 ausgehen, sind durch eine äussere Stirnwand 5 abgeschlossen, die eine Durchtrittsöffnung für die Förderschnecke 1 aufweist und ein das äussere Förderschneckenende aufnehmendes, gasdichtes Austragungsgehäuse 7 trägt. In der abnehmbaren Aussenwand 8 dieser Austragsgehäuse 7 sind die äusseren Enden der Förderschnecken 1 gelagert. Das innerhalb der Fördertröge 4 durch die Förderschnecken 1 erfasste Ofengut wird durch die Durchtrittsöffnungen 6 in die Austragungsgehäuse 7 gefördert, von wo es über Austragungsstutzen 9 in nicht dargestellte, gasdicht angeschlossene Austragungsleitungen fällt.

Da der den zentralen Hohlkörper 2 und die die Förderschnecken aufnehmenden Fördertröge 4 bildende Boden 3 mittels eines Anschlussflansches 10 in einfacher Weise an den Mantel eines Schachtofens angeflanscht werden kann, kann jeder Schachtofen auch nachträglich mit der dargestellten Austragungsvorrichtung ausgerüstet werden, ohne dass besondere Umrüstarbeiten notwendig wären. Die vom Boden 3 gebildeten Fördertröge 4 unterstützen nicht nur die Austragung des Ofengutes, sondern ergeben auch eine vergleichsweise grosse Oberfläche, die eine günstige Kühlwirkung durch die von unten zugängliche Umgebungsluft sicherstellt. Ausserdem wird auf Grund der Bodenform eine hohe Festigkeit erzielt, wobei eine niedrige Bauhöhe eingehalten werden kann. Da die Lager der Förderschnecken 1 ausserhalb des Ofenraumes zu liegen kommen, sind sie auch während des Ofenbetriebes frei zugänglich und können entsprechend gekühlt werden. Für die Aussenlager 11 der Förderschnecken 1 sind in den Fig. 2 und 3 die Kühlflüssigkeitszu- und ableitungen 12 angedeutet. Auch für die Innenlager 13 wäre eine solche Kühlung möglich.

Gemäss Fig. 3 sind die Wellen der Förderschnecken 1 als Hohlwellen 14 ausgebildet. Diese Ausbildung erlaubt eine besonders einfache Montage, weil durch diese Hohlwellen 14 Führungsstangen gesteckt werden können, entlang derer die Förderschnecken eingesetzt oder aus dem Ofen ausgebaut werden können. Auf Grund der abnehmbaren Aussenwand 8 ist ein axiales Einsetzen der Förderschnecken 11 problemlos möglich. Wegen der diametralen Anordnung der Förderschnecken 1 kann die Führungsstange zum Ein- und Ausbauen einer Schnecke in die Hohlwelle 14 der gegenüberliegenden Förderschnecke eingesetzt werden, so dass die Führungsstangen automatisch gegenüber den Lagern zentriert sind. Es zeigt sich somit, dass das Austauschen einer Förderschnecke 1 auch während des Ofenbetriebes keinen besonderen Aufwand erfordert.

Da die die Förderschnecken 1 aufnehmenden Tröge 4 durch eine Stirnwand 5 abgeschlossen sind, bleibt zwischen den Fördertrögen eine Belüftungsöffnung 15 offen, die die Luftzirkulation im Bodenbereich unterstützt.

**Patentansprüche**

1. Vorrichtung zum Austragen von heissem Gut, insbesondere von Eisenschwamm aus einem Schachtofen, bestehend aus sternförmig in entsprechenden Fördertrögen (4) angeordneten, konischen Förderschnecken (1), die mit ihrem inneren Ende in einem zentralen Hohlkörper (2) gelagert sind, dadurch gekennzeichnet, dass der nach unten offene, zentrale Hohlkörper (2) und die die Förderschnecken (1) aufnehmenden Fördertröge (4) durch einen an den Ofenmantel anflanschbaren Boden (3) gebildet sind und dass die Fördertröge (4) zumindest eine dem grössten Aussendurchmesser der Förderschnecken (1) entsprechende grösste Tiefe aufweisen und an der äusseren Stirnseite durch eine Stirnwand (5) abgeschlossen sind, die mit einer Durchtrittsöffnung (6) für die Förderschnecke (1) versehen ist und ein das äussere Förderschneckenende aufnehmendes, gasdichtes Austragungsgehäuse (7) mit einem Austragungsstutzen (9) trägt.

2. Vorrichtung nach Anspruch 1, dadurch gekennzeichnet, dass das äussere Ende der Förderschnecken (1) je in einer abnehmbaren Aussenwand (8) der Austragungsgehäuse (7) gelagert sind.

3. Vorrichtung nach Anspruch 1 oder 2, dadurch gekennzeichnet, dass die Förderschnecken (1) eine Hohlwelle (14) zum Aufnehmen einer Führungsstange aufweisen.

4. Vorrichtung nach einem der Ansprüche 1 bis 3, dadurch gekennzeichnet, dass die Förderschnecken (1) paarweise diametral zum zentralen Hohlkörper (2) angeordnet sind.

5. Vorrichtung nach einem der Ansprüche 1 bis 4, dadurch gekennzeichnet, dass der zentrale Hohlkörper (1) einen Verteilerkegel oder eine Verteilerpyramide bildet.

**Claims**

1. Apparatus for discharging hot material, particularly sponge iron, from a shaft furnace, comprising conical conveyor screws (1), which are arranged in a starlike array in respective conveyor troughs (4) and are mounted at their inner end in a central hollow body (12), characterized in that the open-bottomed, central hollow body (2) and the conveyor troughs (4), which accomodate the conveyor screws (1), are constituted by a bottom (3), which is adapted to be flange-connected to the shell of the furnace, the largest depth of the conveyor troughs (4) is at least as large as the largest outside diameter of the conveyor screws (1), the conveyor troughs (4) are closed at their outer end by an end wall (5) which has an aperture (6), through which the conveyor screw (1) extends, and said end wall carries a gastight discharge housing (7), which is provided with a discharge pipe (9) and receives the outer end of the conveyor screw.

2. Apparatus according to claim 1, characterized in that the outer end of each conveyor screw (1) is mounted in a removable outer wall (8) of the associated discharge housing (7).

3. Apparatus according to claim 1 or 2, characterized in that each conveyor screw (1) comprises a hollow shaft (14) for receiving a guide rod.

4. Apparatus according to any of claims 1 to 3, characterized in that the conveyor screws (1) are arranged in pairs of conveyor screws which are diametrically arranged relative to the central hollow body (2).

5. Apparatus according to any of claims 1 to 4, characterized in that the central hollow body (2) constitutes a distributing cone or a distributing pyramid.

**Revendications**

1. Dispositif pour l'extraction de produit chaud, en particulier d'éponge de fer, d'un four à cuve, formé de vis transporteuses coniques (1) disposées en étoile dans des auges de transport (4) correspondantes et qui sont montées, par leur extrémité intérieure, dans un corps creux central (2), caractérisé par le fait que le corps creux central (2) ouvert vers le bas et les auges de transport (4) logeant les vis transporteuses (1) sont formés par un fond (3) pouvant être assemblé par bride à la paroi du four et que les auges de transport (4) présentent au moins une profondeur maximale correspondant au diamètre extérieur maximal des vis transporteuses (1) et sont formées, sur le côté frontal extérieur, par une paroi frontale (5) qui est munie d'une ouverture de passage (6) pour la vis transporteuses (1) et qui porte une enveloppe d'extraction (7) étanche aux gaz, logeant l'extrémité extérieure de la vis transporteuses et munie d'une tubulure (9) d'extraction.

2. Dispositif selon la revendication 1, caractérisé par le fait que l'extrémité extérieure de chacune des vis transporteuses (1) est logée dans une paroi extérieure amovible (8) de l'enveloppe d'extraction (7).

3. Dispositif selon la revendication 1 ou 2, caractérisé par le fait que les vis transporteuses (1) présentent un arbre creux (14) pour le logement d'une tige de guidage.

4. Dispositif selon l'une des revendications 1 à 3, caractérisé par le fait que les vis transporteuses (1) sont disposées par paires, diamétralement par rapport au corps creux central.

5. Dispositif selon l'une des revendications 1 à 4, caractérisé par le fait que le corps creux central (2) forme un cône distributeur ou une pyramide distributrice.

FIG.1

FIG.2

0 085 290

# FIG.3

0 085 290